# FASCICULE DE BREVET EUROPEEN

(11) **EP 3 240 743 B1**
(45) Date de publication et mention de la délivrance du brevet: **24.08.2022**
(21) Numéro de dépôt: 15825942.4
(22) Date de dépôt: 29.12.2015
(51) Int. Cl.: B65G 47/14, B65G 47/57, B65G 47/82

(54) **DISPOSITIF ET MÉTHODE DE FOURNITURE D'ÉLÉMENTS ORIENTÉS**
VORRICHTUNG UND VERFAHREN ZUR ABGABE EINES AUSGERICHTETEN ELEMENTS
DEVICE AND METHOD FOR DELIVERING ORIENTED ELEMENTS

(30) Priorité: 30.12.2014 WO PCT/EP2014/079478
(43) Date de publication de la demande: 08.11.2017
(73) Titulaire: Sidel Participations, 76930 Octeville-sur-Mer (FR)
(72) Inventeur: ROTH, Emmanuel, 67116 Reichstett (FR)
(74) Mandataire: Sidel Group
(86) Numéro de dépôt international: PCT/FR2015/053764
(87) Numéro de publication internationale: WO 2016/108026

(56) Documents cités:
- DE-A1- 2 632 043
- DE-A1-102008 057 902
- DE-A1-102012 205 060
- FR-A1- 2 683 214
- GB-A- 2 142 598
- US-A- 3 658 167

## Description

La présente invention relève du domaine de l'orientation et de la fourniture d'éléments convoyés en continu, et a pour objet, d'une part, une méthode pour trier de tels éléments avant de les délivrer à la machine en aval, et, d'autre part, un dispositif mettant en œuvre cette méthode.

Dans le domaine de l'invention, les éléments peuvent être des préformes à chauffer puis souffler dans une souffleuse pour créer un contenant de plus grand volume. Il peut aussi s'agir d'éléments de bouchage. La fourniture d'éléments de bouchage est nécessaire en amont d'une machine qui a pour fonction de remplir le conteneur et de le fermer.

La fourniture d'élément de bouchage se fait préférablement avec un dispositif comprenant une trémie, dans laquelle une grande quantité d'éléments de bouchage peut être versée en vrac, un tapis d'élévation, circulant vers le haut depuis la trémie pour y prélever des éléments et les amener au niveau d'une zone de sortie supérieure. Le tapis présente généralement des tasseaux transversaux sur lesquels reposent les éléments de bouchage lors de leur convoyage vers le haut. Des architectures comparables sont possibles pour trier et fournir des préformes, comme par exemple WO2009153489 ou encore EP1652801.

Lors de la circulation sur le tapis entre la trémie, zone d'alimentation, et la zone de sortie, les éléments de bouchage mal orientés sont éjectés, préférablement simplement en les faisant retomber du tapis vers la trémie grâce à la pesanteur, comme cela est par exemple décrit dans US5394972 ou US5586637.

De façon générale, lorsque les éléments sont arrivés en vis-à-vis de la zone de sortie, ils sont dégagés du tapis grâce à un dispositif approprié.

Ainsi, US5394972 propose d'éjecter des éléments de bouchage grâce à un flux d'air provenant d'un caisson monté sur le côté du tapis qui est opposé à la zone de sortie. Une telle éjection pneumatique est aussi proposée par exemple dans WO2006045928, ou encore US7040489. Une éjection à base de flux pneumatique présente des inconvénients parmi lesquels la consommation d'énergie, le bruit, et l'éventuelle pollution des éléments de bouchage par des poussières et autres, ce qui rend ce principe inutilisable dans des domaines où les contraintes sanitaires et d'hygiène sont élevées.

US4735343 divulgue, quant à lui, une réglette oblique fixe, qui crée un effet de coin et a pour effet d'exercer une force transversale évacuant les éléments de bouchage vers la zone de sortie. Ce principe génère cependant de graves problèmes de coincement, en particulier dès lors que les cadences sont élevées. En outre, l'embouchure de la zone de sortie doit être très longue, ce qui rend probables les coincements dans cette zone là aussi dès lors que les cadences sont élevées. Enfin DE 26 32 043 divulgue un dispositif de tri selon le préambule de la revendication 1, ainsi qu'un procédé de tri selon le préambule de la revendication 6.

Il est donc nécessaire de proposer une solution de tri et de fourniture d'éléments de bouchage qui résolve tout ou partie des problèmes ci-dessus. Dans ce contexte, l'invention propose de dégager les éléments de bouchage vers la zone de sortie en les poussant mécaniquement par contact, et ce en particulier à l'aide d'un poussoir mobile d'un côté du tapis à l'autre au niveau de la zone de sortie.

L'invention a aussi pour objet un dispositif de tri selon le contenu de la revendication 1.

L'invention a ainsi pour objet un procédé de tri selon le contenu de la revendication 6.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre un schéma de principe pour une réalisation avec un tapis essentiellement vertical ;
- la figure 2 montre une section entre deux butées transversales, dans deux réalisations différentes, 2a et 2b ;
- la figure 3 illustre l'interaction possible avec un moyen de butée frontale et

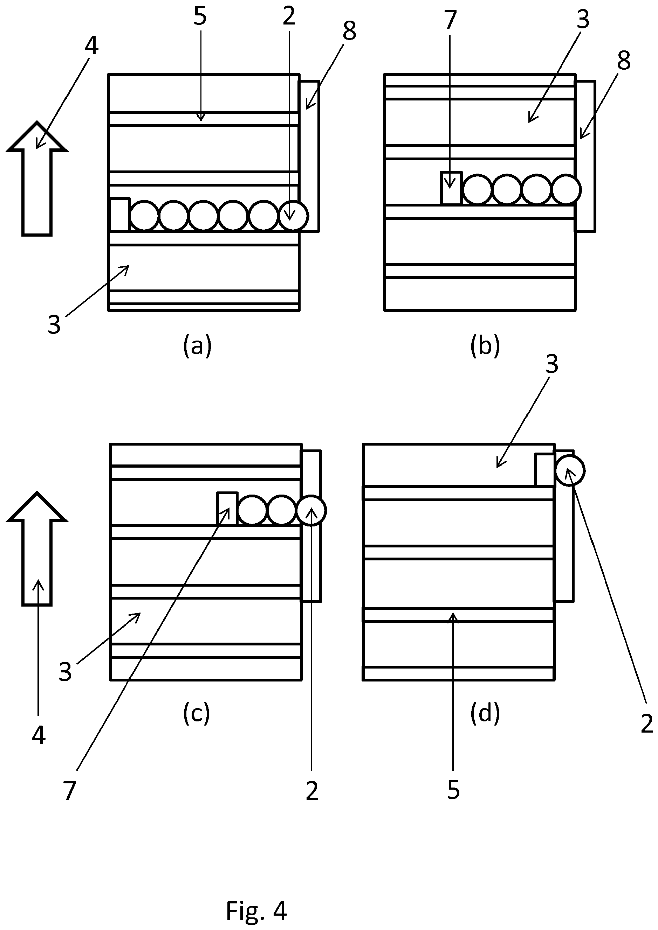

- la figure 4 montre l'évolution de la position d'une colonne d'élément sous l'action du moyen d'éjection.

L'invention a ainsi tout d'abord pour objet un dispositif de tri 1 pour éléments 2 du type capsules ou bouchons pour fermer un flacon ou bouteille, ou encore du type préforme plastique, comprenant un moyen de convoyage 3 continu agencé pour se déplacer dans une direction de convoyage 4 et muni de butées transversales 5 successives entre lesquelles les éléments 2 peuvent reposer sous forme d'un alignement transversal et être ainsi transportés par ledit moyen de convoyage 3 depuis une zone d'alimentation du dispositif de tri 1, ledit dispositif de tri 1 présentant, en outre, une zone de sortie 8, au niveau de laquelle les éléments 2 quittent le moyen de convoyage 3 après avoir y été amenés par lui.

Le dispositif de tri 1 peut donc aussi bien manipuler des éléments 2 pour boucher un conteneur, du type bouteille, flasque, ou autres, qu'une préforme. Un élément 2 de bouchage typique est une capsule ou bouchon, dont au moins une partie et conformée de façon complémentaire au goulot d'un conteneur et est donc cylindrique. Une préforme est quant à elle une pièce plastique creuse avec un goulot qui est destinée à être chauffée puis étirée sous l'effet d'un gaz injecté sous pression alors que la préforme est dans une cavité plus grande.

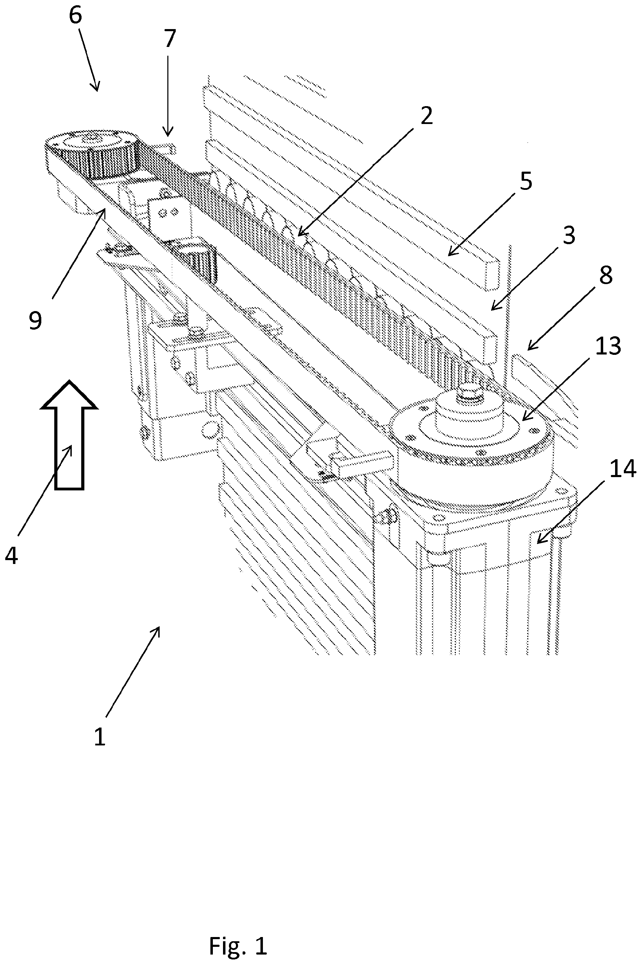

Le dispositif de tri 1 présente ainsi un moyen de convoyage 3 qui déplace les éléments 2 de façon continue dans une direction de convoyage 4. Ce moyen de convoyage 3 peut déplacer les éléments 2 le long d'un plan, la direction de convoyage 4 étant alors en tout temps parallèle à elle-même. Le moyen de convoyage 3 peut aussi déplacer les éléments 2 le long d'un profil courbe. Le moyen de convoyage 3 peut convoyer les éléments 2 vers le haut, par exemple. Il peut prendre la forme d'un tapis 3 ou de butées transversales successives. Dans des réalisations préférées, la direction de convoyage 4 va dans le sens d'une élévation verticale, voir figure 1.

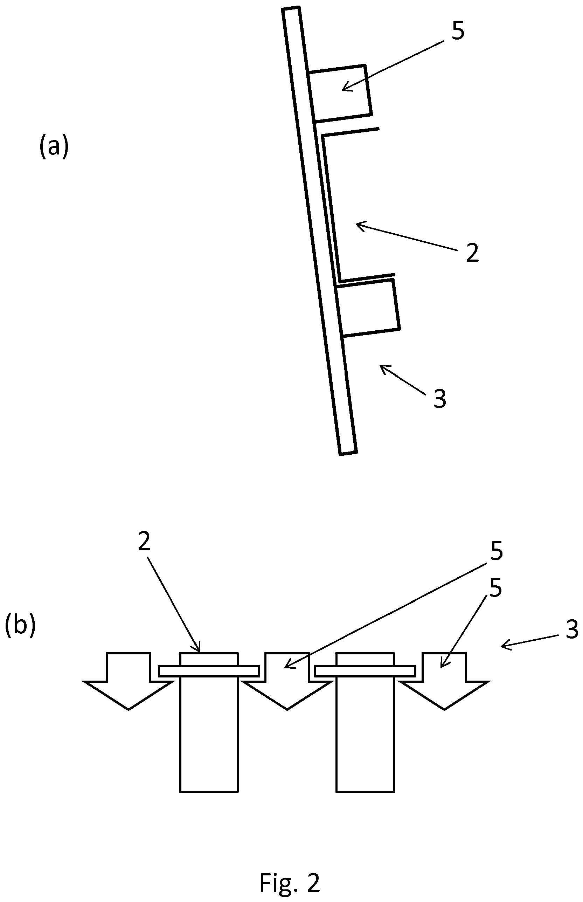

Pour entraîner les éléments 2, il présente des butées transversales 5 à la direction de convoyage 4, qui s'étendent transversalement d'un côté à l'autre du moyen de convoyage 3. Les éléments 2 reposent donc contre ces butées, compte tenu de l'orientation par rapport à la pesanteur. La figure 2a montre par exemple un moyen de convoyage sous forme d'une bande de tapis sur lequel les butées 5 sont posées. Un élément 2 est représenté en appui contre une butée 5, et posé contre la surface de fond du tapis. De façon générale, la pesanteur agit alors de sorte à plaquer l'élément 2 contre la butée. La figure 2b illustre une autre possibilité, où les éléments 2 peuvent traverser le moyen de convoyage 3. Les éléments 2 schématisés sont des préformes, munies de collerettes, qui viennent s'appuyer sur les butées 5, sous l'action de la pesanteur qui agit ici aussi vers le bas de la figure.

Les butées transversales 5 prennent donc en particulier la forme de tasseaux 5 présentant une certaine épaisseur et posés au fond d'un tapis, ou encore de réglettes permettant, deux à deux, de supporter un élément 2 sous forme de préforme au niveau de sa collerette.

Le moyen de convoyage 3 est quant à lui sous la forme d'un entraîneur sans fin, du type bande sans fin, courroie, ou autre. Il peut s'agir de réglettes transversales successives, tenues par leurs extrémités.

Le moyen de convoyage 3 déplace les éléments 2 depuis une zone d'alimentation jusqu'à une zone de sortie 8, où les éléments 2 doivent être éjectés par un mouvement transversal par rapport au moyen de convoyage 3 de sorte à les amener tous du même côté dudit moyen de convoyage 3. En fonctionnement, les butées transversales défilent donc les unes après les autres au niveau de la zone de sortie 8, et les éléments 2 qui reposent sur elles sont poussés vers la zone de sortie 8, rangée après rangée. La zone d'alimentation se trouve notamment au niveau d'une trémie d'alimentation qui peut accueillir un lot d'éléments 2 à traiter dans le cas d'éléments 2 sous forme de bouchons ou capsules. De façon générale, le moyen de convoyage 3 circule à partir d'un endroit où les éléments 2 sont placés en vrac, et en amène avec lui grâce aux butées transversales 5.

Selon l'invention, le dispositif de tri 1 comprend un moyen d'éjection 6, pour dégager les éléments 2 du moyen de convoyage 3 en les déplaçant essentiellement le long des butées transversales 5 et comprenant au moins un poussoir 7 apte à se déplacer au moins transversalement à la direction de convoyage 4 pour pousser les éléments 2 vers la zone de sortie 8.

Le moyen d'éjection 6 comprend par exemple au moins un vérin ou autre actionneur, comme une courroie entraînée. Il a donc pour fonction de pousser tous les éléments 2 situés entre deux butées transversales successives, en direction du côté du moyen de convoyage 3 où se trouve la zone de sortie 8, et ce depuis le côté opposé. Sa manœuvre se répète donc à chaque passage d'une butée transversale, comme pour la vider, et ce qu'elle soit pleine d'éléments 2 d'un côté à l'autre, voire qu'il n'y ait qu'un seul élément 2 tout proche de la zone de sortie 8. Le poussoir 7 a donc un mouvement actif, lors duquel il pousse d'un côté à l'autre les éléments 2, puis un mouvement de retour en position initiale. Préférablement, s'il n'y a qu'un poussoir 7, l'aller et le retour étant suffisamment rapides pour se faire entre deux passages de butées transversales successives. Cela est bien entendu adapté au nombre de poussoirs 7 utilisés.

Le moyen d'éjection 6 entre donc en contact, au niveau du poussoir 7, avec l'élément 2 le plus éloigné de la zone de sortie 8 et le pousse vers elle, en entraînant ainsi les uns après les autres les éléments 2 qui sont entre eux. L'orientation du moyen de convoyage 3 à cet endroit par rapport à la gravité et/ou l'espacement entre deux butées transversales successives peut en particulier servir à éviter les coincements. Comme il sera encore développé plus loin, le poussoir 7 peut avoir un mouvement par rapport par rapport aux butées qui soit uniquement parallèle à elles. Il est alors nécessaire d'aménager aussi pour le poussoir 7 un mouvement dans la direction de convoyage 4 par rapport à un référentiel commun.

Ainsi, selon une caractéristique additionnelle possible, le au moins un poussoir 7 est apte à se déplacer aussi dans la direction de convoyage 4 et dans le même sens. Le mouvement relatif entre le moyen de convoyage 3 et le poussoir 7 peut alors être uniquement transversal. Le moyen de convoyage 3 et le poussoir 7 ont alors tous les deux, par rapport à un point fixe du dispositif de tri 1, un mouvement dans la direction de convoyage 4 et dans le même sens. Ce mouvement du poussoir 7 peut être obtenu par construction, en fonction de l'actionneur retenu.

Afin d'éviter toute interaction avec les butées transversales 5, il est avantageux de prévoir que le poussoir 7 ait un mouvement faible par rapport au moyen de convoyage 3 dans une direction longitudinale, c'est-à-dire dans la direction de convoyage 4. De façon générale, le au moins un poussoir 7 est agencé pour suivre le mouvement que subit une butée transversale 5 dans la direction de convoyage 4 pendant que ledit poussoir 7 se déplace transversalement à ladite direction. Il est alors possible, par exemple, que le poussoir 7 occupe tout l'espace entre deux butées 5 ou en tout cas qu'il n'interfère pas avec les éléments 2 de la rangée suivante.

Dans des modes de réalisation particuliers, le moyen d'éjection 6 comprend une courroie 9 du type bande sans fin, sur laquelle est monté en porte à faux au moins un doigt 10 formant poussoir 7 et dont l'extrémité vient agir sur les éléments 2, ladite courroie 9 circulant notamment autour de roues 13 d'entraînement mobiles en rotation autour d'un axe essentiellement perpendiculaire ou parallèle au moyen de convoyage 3. Ladite courroie 9 a notamment une direction de déplacement avec une composante transversale à la direction de convoyage 4 du moyen de convoyage 3, voire comprenant en outre une composante parallèle à ladite direction.

La figure 1 illustre par exemple le cas particulier où le moyen d'éjection 6 comprend deux poussoirs 7 sous forme de doigt en saillie externe à partir de la surface de bande de la courroie 9.

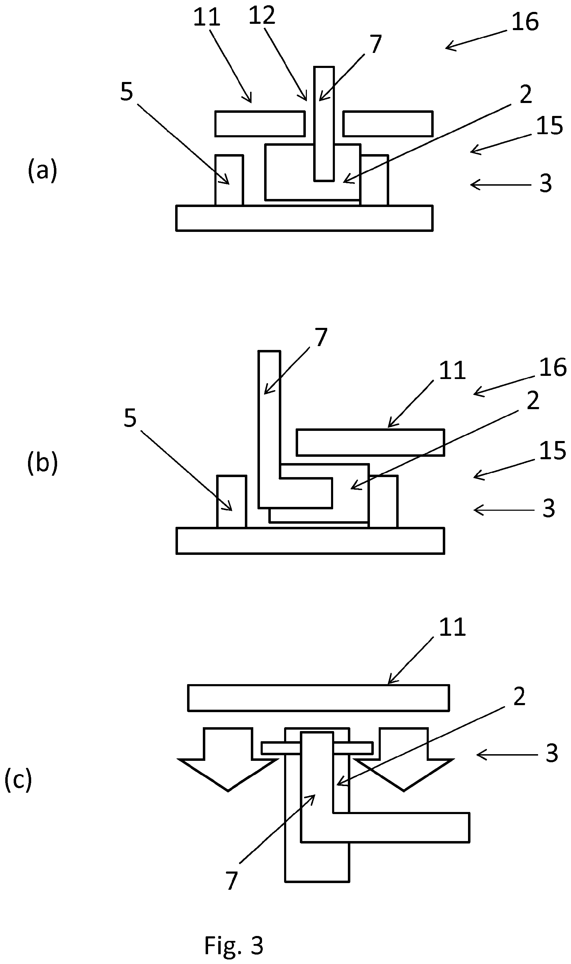

Selon une caractéristique additionnelle possible du dispositif de tri 1, il comprend, en outre, un moyen de butée frontale 11, du type plaque de maintien, s'étendant à distance du moyen de convoyage 3 pour maintenir contre ce dernier les éléments 2, le au moins un poussoir 7 s'étendant de part et d'autre de ce moyen de butée frontale 11, de sorte à être entraîné dans la zone située d'un côté dudit moyen de butée frontale 11 et à agir sur les éléments 2 dans la zone opposée. Cela est en particulier représenté dans les figures 3a et 3b.

L'extrémité du moyen de butée frontale 11 s'étend notamment avec une partie d'extrémité en oblique pour suivre le mouvement des éléments 2 dans la direction de convoyage 4 alors qu'ils sont envoyés dans la zone de sortie 8, le au moins un poussoir 7 prenant la forme d'un crochet s'étendant au-dessus de ladite extrémité, voir figure 3b.

Alternativement, le moyen de butée frontale 11 présente une ouverture 12 oblique essentiellement linéaire pour suivre le mouvement des éléments 2 dans la direction de convoyage 4 alors qu'ils sont envoyés dans la zone de sortie 8, le au moins un poussoir 7 traversant le moyen de butée frontale 11 au niveau de ladite ouverture 12, figure 3a.

Dans ces deux cas, la partie active du poussoir 7 se trouve donc d'un côté du moyen de butée frontale 11, alors que sa base, reliée à l'actionneur qui le met en mouvement, du type vérin, courroie 9 ou autres, se trouve de l'autre côté du moyen de butée frontale 11.

La figure 3c montre une alternative particulière où le poussoir 7 est intégralement du même côté du moyen de butée frontale 11.

L'invention a aussi pour objet un procédé de tri pour éléments 2 du type capsule, bouchons, ou autre pièces de fermeture d'un contenant, voire du type à collerette comme une préforme de bouteille plastique, ledit procédé comprenant
convoyer les éléments 2 sur un moyen de convoyage 3 circulant dans une direction de convoyage 4, depuis une zone d'alimentation jusqu'à une zone de sortie 8 située sur un côté dudit moyen de convoyage 3,
dégager du moyen de convoyage 3 vers la zone de sortie 8 les éléments 2 qui sont présents sur le moyen de convoyage (3) à ce moment, c'est-à-dire les éléments 2 qui arrivent au niveau de la zone de sortie 8, grâce à un mouvement transversal. Le convoyage depuis la zone d'alimentation jusqu'à la zone de sortie 8 s'accompagne en effet généralement en même temps de l'élimination des éléments 2 non conformes à un critère de positionnement, ou ne permet que le convoyage des éléments 2 correctement positionnés.

Ce procédé met en œuvre le dispositif de tri 1 tel que décrit ci-dessus.

Lors de l'étape de convoyage susmentionnée, ce procédé peut aussi éliminer du moyen de convoyage 3 les éléments 2 qui n'y sont pas placés avec une orientation prédéfinie, ou forcer leur positionnement. De façon générale, au niveau de la zone de sortie 8, les éléments 2 doivent être dans une position prédéfinie.

Dégager les éléments 2 au niveau de la zone de sortie 8 se fait par un mouvement des éléments 2 transversal à la direction de convoyage 4, et ce mouvement est provoqué par un moyen d'éjection 6, qui comprend au moins un poussoir 7, déplacé par un actionneur.

Ainsi, selon l'invention, dégager les éléments 2 du moyen de convoyage 3 se fait en les poussant par contact avec un poussoir 7 mobile, qui se déplace donc d'un côté à l'autre du moyen de convoyage 3, vers la zone de sortie 8. Le au moins un poussoir 7 agit donc sur l'élément 2 situé à l'opposé de la zone de sortie 8 de sorte à le pousser vers elle, cet élément 2 agissant sur le suivant en direction de ladite zone de sortie 8 et ainsi de suite.

Ledit poussoir 7 mobile peut donc se déplacer vers le côté de la zone de sortie 8, depuis le côté opposé, transversalement à la direction de convoyage 4.

Selon une caractéristique additionnelle possible, le poussoir 7 est mobile tant transversalement à la direction de convoyage 4, c'est-à-dire d'un côté à l'autre du moyen de convoyage 3, que le long de ladite direction de convoyage 4, de sorte à pouvoir, lors de son action contre les éléments 2 pour les pousser transversalement vers la zone de sortie 8, accompagner le mouvement desdits éléments 2 dans la direction de convoyage 4 et dans le même sens, le mouvement relatif étant éventuellement nul dans la direction de convoyage 4.

Ainsi, selon une caractéristique additionnelle possible, la vitesse de circulation du poussoir 7 dans la direction de convoyage 4 est telle que ledit poussoir 7 suit le mouvement du moyen de convoyage 3 dans ladite direction.

De façon privilégiée, la vitesse de déplacement du poussoir 7 transversale à la direction de convoyage 4 est suffisamment rapide pour que tant un élément 2 qui se situerait à l'extrémité du moyen de convoyage 3 proche de la zone de sortie 8 qu'un élément 2 qui se situerait à l'autre extrémité puissent passer dans une embouchure de la zone de sortie 8, compte tenu du déplacement du moyen de convoyage 3 dans la direction de convoyage 4. Il est ainsi préférable de prévoir une vitesse transversale élevée pour que l'embouchure puisse être petite. En effet, une embouchure trop grande peut générer des problèmes de coincement lorsqu'il s'agit de réduire à un déplacement en une seule colonne. Ladite vitesse est en outre éventuellement suffisamment rapide pour que le au moins un poussoir 7 ne gêne pas la progression du tapis 3 dans la direction de convoyage 4.

Enfin, selon une caractéristique additionnelle possible concernant le pilotage du dispositif de tri 1, la vitesse de circulation du poussoir 7 est proportionnelle à la vitesse de circulation du moyen de convoyage 3. Comme il sera encore décrit plus loin, la vitesse du poussoir 7 est homogène pendant son trajet, mais est de façon préférée proportionnelle à la vitesse d'avance du moyen de convoyage 3.

L'invention va maintenant être expliquée en référence avec les modes de réalisation illustrés. La figure 1 illustre ainsi un dispositif de tri 1 présentant une trémie, non représentée, dans laquelle des éléments 2 du type capsule ou bouchon de fermeture d'une bouteille peuvent être déposés en vrac.

Un tapis 3 formant moyen de convoyage s'étend depuis une ouverture pratiquée au niveau de la partie inférieure de la trémie, formant zone d'alimentation. Le tapis 3 prend la forme d'une bande sans fin, qui s'élève à partir de la zone d'alimentation, jusqu'à une hauteur qui dépend bien souvent de la hauteur à laquelle il est nécessaire de fournir les éléments 2 à la machine en aval.

Le tapis 3 avance donc dans une direction de convoyage 4 qui correspond à la grande longueur dudit tapis 3 et entraîne les éléments 2 vers le haut, jusqu'à une zone de sortie 8. La direction de convoyage 4 a donc une composante verticale, et peut aussi avoir une composante horizontale permettant à la pesanteur de plaquer les éléments 2 contre le tapis 3.

Le tapis 3 comprend des tasseaux 5 successifs, formant butées transversales, qui s'étendent transversalement à la direction de convoyage 4, et donc selon la largeur du tapis 3. Lors de l'élévation dans la direction de convoyage 4, les éléments 2 reposent sur les tasseaux 5 qui les entraînent dans la direction de convoyage 4. Ils sont régulièrement répartis le long du tapis 3 avec un certain pas et ont une certaine hauteur qui leur permet de former un support pour les éléments 2. Ils s'étendent en outre préférablement d'un côté du tapis 3 jusqu'à l'autre. Ainsi, chaque tasseau 5 entraîne une pluralité d'éléments 2 en fonction de la quantité présente dans la zone d'alimentation. Un tasseau 5 peut au maximum entraîner une rangée d'éléments 2 qui occupe toute sa largeur. Comme les éléments 2 qui ne sont pas correctement positionnés sur la tapis 3 en sont dégagés entre la zone d'alimentation et la zone de sortie 8, il se peut qu'il y ait bien moins d'éléments 2 à dégager, voire aucun, lorsque le tasseau 5 arrive au niveau de la zone de sortie 8. Il est donc nécessaire de pouvoir éjecter d'un tasseau 5 aussi bien un élément 2 qui se trouverait à l'extrémité du tasseau 5 proche de la zone de sortie 8 qu'un élément 2 qui se trouverait à l'autre extrémité. La vitesse du mouvement du moyen d'éjection 6 est donc adapté pour assurer ces éjections, compte tenu du défilement du tapis 3 et des dimensions du passage de la zone de sortie 8.

Afin de dégager les éléments 2 du tapis 3 au niveau de la zone de sortie 8, le dispositif de tri 1 comprend un moyen d'éjection 6 qui pousse, par contact, les éléments 2 qui sont contre un tasseau 5 et ce jusqu'à ladite zone de sortie 8. La figure 1 montre par exemple une colonne d'éléments 2 contre un tasseau 5, qui doivent être poussés par le moyen d'éjection 6 vers la zone de sortie 8. Le moyen d'éjection 6 agit ainsi sur l'élément 2 le plus éloigné de la zone de sortie 8 et se déplace vers elle, chacun des éléments 2 de la colonne agissant contre celui devant lui en direction de la zone de sortie 8.

Comme illustré figure 1, le moyen d'éjection 6 comprend une bande sans fin ou courroie 9, qui tourne grâce à deux roues 13 en rotation autour d'un axe essentiellement vertical. Au moins une des deux roues 13 est motrice et entraîne la courroie 9, éventuellement grâce à une coopération crantée. Le dispositif de tri 1 comprend ainsi un moteur 14 entraînant au moins l'une des roues 13. Les deux roues 13 sont disposées chacune au-delà du tapis 3, de sorte que la courroie 9 a un mouvement linéaire plan à proximité du tapis 3 sur toute la largeur de ce dernier.

Avec une telle configuration, la courroie 9 suit donc un trajet tel qu'elle longe le tapis 3 dans un sens, pour une action sur les éléments 2, puis, après le retour autour d'une roue 13, fait le trajet en sens inverse, à distance du tapis 3, pour son trajet retour en position de départ. Le trajet utile, lors duquel le moyen d'éjection 6 agit sur les éléments 2, pour les pousser vers le côté du tapis 3 où se trouve la zone de sortie 8 depuis le côté opposé du tapis 3, se fait donc tout contre le tapis 3, alors que le retour au point de départ se fait dans un plan plus distant du tapis 3, ce qui permet en particulier d'éviter toute interaction mécanique entre le moyen d'éjection 6 et le tapis 3 sur ce trajet de retour. Bien entendu, d'autres montages sont possibles pour aménager le retour : les axes de roues 13 peuvent par exemple être essentiellement horizontaux, l'aller et le retour formant alors approximativement un plan parallèle au tapis 3, etc.

On notera que de façon générale, le moyen d'éjection 6 peut mettre en œuvre différents types d'actionneur pour créer le mouvement du au moins un poussoir 7 dans le sens de la sortie des éléments 2.

Le moyen d'éjection 6 comprend au moins un poussoir 7 pour agir par contact sur la colonne d'éléments 2 à dégager vers la zone de sortie 8. Dans la réalisation illustrée figure 1, le moyen d'éjection 6 comprend une courroie 9 sur laquelle s'étend en porte à faux au moins un doigt 10, qui vient au contact de l'élément 2 qui se trouve le plus éloigné de la zone de sortie 8. La figure 1 montre en l'occurrence deux doigts 10 formant chacun un poussoir 7.

Le poussoir 7 s'étend ainsi en porte à faux depuis la partie de courroie 9 à proximité du tapis 3, jusque contre les éléments 2. Afin d'assurer un bon entraînement, il est utile que le poussoir 7 agisse contre la plus grande partie possible de l'élément 2. Il est donc préférable que le poussoir 7 agisse non seulement contre la partie de l'élément 2 qui déborde au-delà du tasseau 5, mais aussi contre la partie de l'élément 2 qui correspond à la hauteur du tasseau 5 depuis le fond du tapis 3. Cela signifie alors que le poussoir 7, dans son trajet actif depuis une extrémité du tasseau 5 jusqu'à l'extrémité au niveau de la zone de sortie 8, doit circuler aussi dans le volume creux entre deux tasseaux 5 successifs. Comme les tasseaux 5 sont montés sur un tapis 3 mobile lors de l'action du poussoir 7, il est nécessaire de coordonner le déplacement transversal du poussoir 7 d'un côté à l'autre du tapis 3 avec le mouvement d'avance dudit tapis 3, pour éviter qu'un mouvement transversal du poussoir 7 trop lent ne crée une collision entre lui et le tasseau 5 qui s'en est rapproché longitudinalement.

Dans les cas particuliers où les tasseaux 5 sont très espacés, il peut être tolérable d'avoir un poussoir 7 qui ne se déplace que dans une direction strictement transversale à la direction de convoyage 4 et suffisamment rapidement pour éviter les collisions décrites ci-dessus. La vitesse du poussoir 7 est fonction de la cadence si elle est faible.

De façon générale, il est préférable d'aménager un mouvement du poussoir 7 qui comprenne non seulement une composante principale transversale à la direction de convoyage 4 pour pousser les éléments 2 en direction d'un côté du tapis 3, mais aussi une composante longitudinale, dans la direction de convoyage 4, avec le même sens. Préférablement, le moyen d'éjection 6 est agencé de sorte que le mouvement longitudinal du poussoir 7 lors de son trajet d'un côté à l'autre du tapis 3 lors de l'éjection correspond au mouvement longitudinal que subit simultanément le tasseau 5.

Ce mouvement longitudinal du poussoir 7 est obtenu par construction dans le cas d'un moyen d'éjection 6 reposant sur un principe de courroie 9 comme illustré à la figure 1. Il suffit alors de décaler l'une par rapport à l'autre dans la direction de convoyage 4 les roues 13 autour desquelles tourne la courroie 9 de sorte que la roue 13 du côté de la zone de sortie 8 est plus en avant que l'autre dans le sens de la direction de convoyage 4.

Il convient de remarquer que l'amplitude du mouvement que subit tapis 3 pendant l'éjection des éléments 2 vers la zone de sortie 8 définit la dimension longitudinale de l'embouchure de la zone de sortie 8. En effet, cette embouchure doit être suffisante pour laisser passer tous les éléments 2 dans le cas extrême où ils sont en nombre tel qu'ils occupent toute la largeur du tapis 3. L'élément 2 initialement le plus proche de la zone de sortie 8 est donc éjecté dès le début de l'action du moyen d'éjection 6, alors que celui qui était initialement le plus éloigné est éjecté à la fin de la manœuvre du moyen d'éjection 6, et après avoir parcouru une certaine distance longitudinale. Une grande embouchure peut cependant amener à des coincements, puisqu'il est nécessaire d'obtenir au final un flux d'éléments 2 organisé en une seule colonne.

Ainsi, pour éviter de devoir aménager une embouchure trop grande, il est préférable d'aménager un moyen d'éjection 6 capable de dégager tous les éléments 2 dans un temps le plus court possible, et donc préférablement avec un déplacement faible dans la direction longitudinale.

La vitesse de circulation du poussoir 7 est proportionnelle, avec un facteur fixe, à la vitesse de circulation du moyen de convoyage 3. La dimension de la fenêtre longitudinale à travers laquelle les éléments 2 sont dégagés à un côté est elle aussi fixe, ainsi que l'angle entre la direction du mouvement du poussoir 7 et la direction de convoyage 4.

Le dispositif de tri 1 comprend, en outre, un moyen de butée frontale 11, qui sert à maintenir les éléments 2 contre le tapis 3. En effet, des vibrations pourraient avoir pour effet de décaler les éléments 2, ces derniers s'éloignant alors du fond du tapis 3, c'est-à-dire perpendiculairement à lui. Dans les cas où le tapis 3 est orienté de sorte que la pesanteur ne plaque pas les éléments 2 contre le tapis 3, ce moyen de butée frontale 11 permet d'assurer que les éléments 2 ne s'éloignent pas du tapis 3, et restent ainsi effectivement bien soutenus par les tasseaux 5. Le moyen de butée frontale 11 peut alors prendre essentiellement la forme d'une plaque, parallèle au tapis 3, à une distance du fond du tapis 3 qui est bien entendu supérieure à la hauteur des tasseaux 5, et au moins légèrement supérieure à la hauteur des éléments 2. Ce moyen de butée frontale 11 n'est plus nécessaire au-delà de la zone de sortie 8, puisque les éléments 2 ont normalement été dégagés du moyen de convoyage 3. Le moyen de butée frontale 11 délimite donc une première zone, ou zone de travail 15, là où évoluent les éléments 2, et une deuxième zone, ou zone extérieure 16, de l'autre côté, où évolue la courroie 9 ou autre actionneur.

Le au moins un poussoir 7 du moyen d'éjection 6 est actionné depuis la zone extérieure 16, où se trouve l'actionneur du moyen d'éjection 6, courroie 9, vérin, ou autres. Comme le au moins un poussoir 7 doit agir contre les éléments 2, et que ceux-ci circulent dans la zone de travail 15, le au moins un poussoir 7 doit s'étendre de part et d'autre du moyen de butée frontale 11 ou au moins de sa projection, c'est-à-dire qu'il présente une portion dans la zone de travail 15, pour agir contre les éléments 2, ainsi qu'une portion dans la zone extérieure 16, pour être entraîné par l'actionneur du moyen d'éjection 6. Pour permettre le passage du au moins poussoir 7 d'un côté à l'autre de la délimitation définie par le moyen de butée frontale 11, celui-ci présente un passage, ou ouverture 12, dans lequel peut circuler le au moins un poussoir 7 lors de son action contre les éléments 2 en vue de les dégager par la zone de sortie 8.

Par exemple, le moyen de butée frontale 11 sous forme de plaque parallèle au moyen de convoyage sous forme de tapis 3 peut comprendre une ouverture 12 qui suit la trajectoire du au moins un poussoir 7, en particulier une ouverture 12 linéaire, s'étendant d'un côté à l'autre du tapis 3 et éventuellement aussi dans la direction de convoyage 4 et dans le même sens. Le moyen de butée frontale 11 peut alors prendre la forme de deux éléments successifs, séparés par ladite ouverture 12, qui assure un maintien des éléments 2 même lors de leur déplacement transversal. Le poussoir 7 peut alors être droit, s'étendant essentiellement perpendiculairement au plan du tapis 3 à cet endroit. L'élément 2 reste ainsi guidé par le moyen de butée frontale 11 de chaque côté de l'ouverture 12, le poussoir 7 agissant environ au milieu de l'élément 2, comme le montre la figure 3a, qui représente la section le long du trajet d'un côté à l'autre du tapis 3. Cette figure illustre qu'à tout endroit entre les deux côtés du tapis 3, l'élément 2 est retenu par le moyen de butée frontale 11 à chaque côté du poussoir 7.

Comme le montre la figure 3b, il est aussi possible de simplement prévoir un moyen de butée frontale 11 dont le contour de l'extrémité libre suit la trajectoire qu'a le poussoir 7 lors de son trajet actif sur les éléments 2. Ce trajet du poussoir 7 est préférablement coordonné avec celui des éléments 2 lorsqu'ils sont, d'une part, emmenés dans la direction de convoyage 4 par le moyen de convoyage et, d'autre part, emmenés transversalement à cette direction vers la zone de sortie 8 par le au moins un poussoir 7. Cette trajectoire prend préférablement la forme d'une droite, ayant une composante transversale à la direction de convoyage 4, ainsi qu'une composante dans la direction de convoyage 4 et dans le même sens, de sorte que ladite droite avance dans la direction de convoyage 4 à mesure qu'elle avance vers la zone de sortie 8. Les éléments 2 suivent donc cette trajectoire, ainsi que le poussoir 7 et l'extrémité du moyen de butée frontale 11. Le mouvement transversal du poussoir 7 est alors coordonné avec le mouvement du moyen de convoyage 3 pour qu'une partie suffisante de l'élément 2 soit en permanence recouverte par le moyen de butée frontale 11, en tout point du cheminement vers le côté de la zone de sortie 8.

Cette figure 3b montre aussi que dans ce cas, le poussoir 7 a préférablement une forme de coude, avec une partie s'étendant depuis la zone extérieure 16 jusque dans la zone de travail 15 au-delà de l'extrémité du moyen de butée frontale 11. Le renvoi de ce coude permet au poussoir 7 d'atteindre l'élément 2, alors que ce dernier est suffisamment entre le tapis 3 et le moyen de butée frontale 11 pour assurer le guidage souhaité. Le renvoi s'étend entre le moyen de butée frontale 11 et le tapis 3, entre deux tasseaux 5 successifs.

Avec ces réalisations, il est possible de pousser le dernier élément 2 de la colonne transversale, avec un actionneur du moyen d'éjection 6 qui est situé dans la zone extérieure 16, et un poussoir 7 évoluant de l'autre côté, dans la zone de travail 15, alors que l'élément 2 reste, pendant tout son parcours d'un côté à l'autre du tapis 3 contenu entre, d'un côté, la surface du tapis 3, et, de l'autre côté, le moyen de butée frontale 11.

Bien entendu, le poussoir 7 peut être muni à son extrémité d'une plaque pour son contact avec l'élément 2, ce qui permet d'avoir un mouvement du poussoir 7 dans la direction de convoyage 4 qui n'est pas rigoureusement le même que celui de l'élément 2 lui-même tout en conservant un effort transversal bien équilibré et limitant les coincements entre les butées transversales.

Ainsi, le moyen d'éjection 6 dégage une rangée de produits 2 du moyen de convoyage 3 une fois que la rangée précédente a été dégagée, chaque rangée, ou encore lot ou train, correspondant à l'ensemble des produits 2 qui sont contre un même moyen de butée 5. A un instant donné, seul un poussoir 7 est donc actif pour éjecter des produits 2, et le contenu d'une seule butée 5 transversale est traité par le moyen d'éjection 6. La zone de sortie 8, située éventuellement en partie supérieure du moyen de convoyage 3, est donc dimensionnée pour recevoir une colonne d'un seul produit 2 de large. En aval de la zone de sortie 8, le flux est organisé en trains successifs de produits 2, les uns derrière les autres. Les produits 2 de ce flux de sortie traversent donc l'un après l'autre la zone de sortie 8, essentiellement transversalement à la direction de convoyage 4 et continuent à s'éloigner du moyen de convoyage 3.

La zone de sortie 8, localisée d'un côté du moyen de convoyage 3, permet donc à chaque produit 2 successivement d'aller vers l'étape suivante du processus, correctement orienté, de sorte que seuls les produits 2 conformes pour la suite du processus circulent par la zone de sortie 8 latérale les uns après les autres, par train successif obtenu en poussant transversalement tous les produits 2 alignés en une rangée les uns à côté des autres contre une butée transversale 5.

La taille de l'embouchure de la zone de sortie 8 permet de réceptionner tant un produit 2 qui était très proche du côté où elle se trouve ainsi qu'un produit 2 très éloigné, et donc au niveau du côté opposé, les deux produits 2 étant contre la même butée transversale 5. L'embouchure de la zone de sortie 8 correspond à la taille de un voire deux produits 2. La zone de sortie 8 se resserre ensuite légèrement jusqu'à un canal dimensionné pour la circulation d'une colonne large d'un seul produit 2. Ce léger resserrement depuis l'embouchure permet d'aligner le long du même axe tous les produits 2 initialement contre une même butée transversale 5, étant rappelé que, dans l'absolu, le dernier produit 2 de la rangée passe par l'embouchure en étant légèrement décalé par rapport au premier produit 2 dans la direction de convoyage 4, ce décalage correspondant au trajet que parcourt le moyen de convoyage 3. Cette zone de léger resserrement ne sert donc pas à réduire en une seule colonne un flux large de plusieurs produits 2 de front, mais bien à résorber ce décalage et réduire ainsi la largeur d'une rangée de produits 2 déjà les uns derrière les autres.

Le moyen d'éjection 6, d'une part, et le moyen de convoyage 3, d'autre part, sont par ailleurs mis en mouvement par des moteurs séparés, dont les vitesses sont contrôlées de façon coordonnée. On évite ainsi d'engrener un poussoir 7 sur le moyen de convoyage 3 et la synchronisation se fait de façon électronique, ce qui évite des usures et casses prématurées compte tenu des frottements et de la transmission d'effort.

La zone de sortie 8 présente donc une embouchure ou passage, sous forme d'une ouverture dans une délimitation de guidage, type paroi, qui s'étend d'un côté du moyen de convoyage 3 le long de la direction de convoyage 4. La zone de sortie 8 se prolonge ensuite en un canal dans lequel les produits 2 évoluent sous forme d'un flux de sortie constitué d'une colonne large d'un seul produit 2. Ce flux mono colonne est formé par la succession de lots de produits 2, chaque lot correspondant à l'ensemble des produits 2 qui se trouvaient précédemment contre le même moyen de butée 5.

Les produits 2 sont à base circulaire, ce qui, aux cadences auxquelles ce type de dispositif de tri 1 fonctionne, peut amener à des problèmes de coincement dans les cas où il est nécessaire de resserrer jusqu'à une seule colonne un flux de produits 2 initialement plus large passant par l'embouchure de la zone de sortie 8, voire un flux avec deux produits 2 de front ou plus. L'embouchure de la zone de sortie 8 est donc dimensionnée pour la circulation d'un flux en colonne large d'un seul produit 2, et éventuellement aussi pour tenir compte de l'avance du moyen de convoyage 3 entre le premier produit 2 éjecté et le dernier, comme expliqué plus haut.

Ejecter les produits 2 à travers l'embouchure de la zone de sortie 8 sous forme de trains ou lots successifs d'un seul produit 2 de large permet d'éviter l'aménagement en zone de sortie 8 d'un guidage de convergence pour amener un flux significativement plus large qu'un seul produit 2, vers un flux mono colonne, et les problèmes de coincement associés. Préférablement, l'embouchure de la zone de sortie 8 ne dépasse donc pas la taille de deux produits 2, de sorte à éviter toute superposition de produits 2 ou décalage transversalement à leur avance, amenant à un flux large. De plus, afin de n'éjecter le contenu que d'un seul moyen de butée 5 à la fois, le pas entre les moyens de butée 5 successifs est de l'ordre de grandeur de l'embouchure de la zone de sortie 8, par exemple environ deux produits 2. Le pas entre les moyens de butée 5 successifs est préférablement légèrement plus grand que l'embouchure de la zone de sortie 8, donc légèrement plus grand qu'un ou deux produits 2.

Le mouvement transversal d'un poussoir 7 d'un côté à l'autre du moyen de convoyage 3 se fait donc avec un mouvement longitudinal dans la direction de convoyage 4 de l'ordre de la taille de l'embouchure. Compte tenu de la taille de l'embouchure, en particulier entre un et deux produits 2, pour éviter les problèmes de coincements mentionnés ci-dessus, le mouvement du moyen de d'éjection 6 est donc quasiment perpendiculaire à la direction de convoyage 4.

Grâce à l'invention, il est ainsi possible d'éjecter des éléments d'un dispositif de tri muni d'un convoyeur continu, et ce de façon sûre et rapide, tout en limitant l'énergie consommée et en respectant des conditions d'hygiène élevées.

Bien que la description ci-dessus se base sur des modes de réalisations particuliers, elle n'est nullement limitative de la portée des revendications, et des modifications peuvent être apportées, notamment par substitution d'équivalents techniques ou par combinaison différente de tout ou partie des caractéristiques développées ci-dessus.

## Revendications

1. Dispositif de tri (1) pour éléments (2) du type capsules ou bouchons pour fermer un flacon ou bouteille, ou encore du type préforme plastique, comprenant un moyen de convoyage (3) continu agencé pour se déplacer dans une direction de convoyage (4) et muni de butées transversales (5) successives entre lesquelles les éléments (2) peuvent reposer sous forme d'un alignement transversal et être ainsi transportés par ledit moyen de convoyage (3) depuis une zone d'alimentation du dispositif de tri (1), ledit dispositif de tri (1) présentant, en outre, une zone de sortie (8), au niveau de laquelle les éléments (2) quittent le moyen de convoyage (3) après avoir y été amenés par lui, et dans lequel lors de la circulation sur le tapis entre la trémie, zone d'alimentation, et la zone de sortie, les éléments de bouchage mal orientés sont éjectés,
dispositif de tri (1) **caractérisé en ce que**
il comprend un moyen d'éjection (6), pour dégager les éléments (2) du moyen de convoyage (3) en les déplaçant essentiellement le long des butées transversales (5) et comprenant au moins un poussoir (7) apte à se déplacer au moins transversalement à la direction de convoyage (4) pour pousser une colonne d'éléments (2) contre une butée transversale (5) vers la zone de sortie (8), le moyen d'éjection (6) agissant ainsi sur l'élément (2) le plus éloigné de la zone de sortie (8) et se déplaçant vers elle, chacun des éléments (2) de la colonne agissant contre celui devant lui en direction de la zone de sortie (8)

2. Dispositif de tri (1) selon la revendication 1, où
le au moins un poussoir (7) est apte à se déplacer aussi dans la direction de convoyage (4) et dans le même sens.

3. Dispositif de tri (1) selon la revendication 2, où
le au moins un poussoir (7) est agencé pour suivre le mouvement que subit une butée transversale (5) dans la direction de convoyage (4) pendant que ledit poussoir (7) se déplace transversalement à ladite direction.

4. Dispositif de tri (1) selon l'une quelconque des revendications 1 à 3, où
le moyen d'éjection (6) comprend une courroie (9), du type bande sans fin, sur laquelle est monté en porte à faux au moins un doigt (10) formant poussoir (7) et dont l'extrémité vient agir sur les éléments (2).

5. Dispositif de tri (1) selon l'une quelconque des revendications 1 à 4, **caractérisé en ce que**
il comprend, en outre, un moyen de butée frontale (11), du type plaque de maintien, s'étendant à distance du moyen de convoyage (3) pour maintenir contre ce dernier les éléments (2), le au moins un poussoir (7) s'étendant de part et d'autre de ce moyen de butée frontale (11), de sorte à être entraîné dans la zone située d'un côté dudit moyen de butée frontale (11) et à agir sur les éléments (2) dans la zone opposée.

6. Procédé de tri pour éléments (2) du type capsule, bouchons, ou autre pièces de fermeture d'un contenant, voire du type à collerette comme une préforme de bouteille plastique, ledit procédé comprenant
convoyer les éléments (2) sur un moyen de convoyage (3) circulant dans une direction de convoyage (4), depuis une zone d'alimentation jusqu'à une zone de sortie (8) située sur un côté dudit moyen de convoyage (3),
éjecter lors de la circulation sur le tapis entre la trémie, zone d'alimentation, et la zone de sortie, les éléments de bouchage mal orientés,
dégager du moyen de convoyage (3) vers la zone de sortie (8) les éléments (2) qui sont présents sur le moyen de convoyage (3) à ce moment,
procédé **caractérisé en ce que**
dégager les éléments (2) du moyen de convoyage (3) se fait en les poussant par contact avec un poussoir (7) mobile,
et **en ce que** la vitesse de déplacement du poussoir (7) transversale à la direction de convoyage (4) est suffisamment rapide pour que tant un élément (2) qui se situerait à l'extrémité du moyen de convoyage (3) proche de la zone de sortie (8) qu'un élément (2) qui se situerait à l'autre extrémité puissent passer dans une embouchure de la zone de sortie (8), compte tenu du déplacement du moyen de convoyage (3) dans la direction de convoyage (4).

7. Procédé de tri selon la revendication 6, où
le poussoir (7) est mobile tant transversalement à la direction de convoyage (4), c'est-à-dire d'un côté à l'autre du moyen de convoyage (3), que le long de ladite direction de convoyage (4).

8. Procédé de tri selon la revendication 7, où
la vitesse de circulation du poussoir (7) dans la direction de convoyage (4) est telle que ledit poussoir (7) suit le mouvement du moyen de convoyage (3) dans ladite direction.

9. Procédé de tri selon l'une quelconque des revendications 6 à 8, où
la vitesse de circulation du poussoir (7) est proportionnelle à la vitesse de circulation du moyen de convoyage (3).

## Patentansprüche

1. Sortiervorrichtung (1) für Elemente (2) vom Typ Kappen oder Verschlüsse zum Verschließen eines Flakons oder einer Flasche oder auch vom Typ eines Kunststoff-Vorformlings, umfassend ein Mittel zur kontinuierlichen Förderung (3), das dafür angeordnet ist, sich in einer Förderrichtung (4) fortzubewegen und mit aufeinanderfolgenden Queranschlägen (5) versehen ist, zwischen denen die Elemente (2) in Form einer Querausrichtung ruhen und so vom Fördermittel (3) von einem Beschickungsbereich der Sortiervorrichtung (1) transportiert werden können, wobei die Sortiervorrichtung (1) ferner einen Austrittsbereich (8) aufweist, an welchem die Elemente (2) das Fördermittel (3) verlassen, nachdem sie von ihm dort hingebracht worden sind, und wobei beim Lauf auf dem Band zwischen dem Trichter, Beschickungsbereich, und dem Austrittsbereich die schlecht ausgerichteten Verschlusselemente ausgeworfen werden,
wobei die Sortiervorrichtung (1) **dadurch gekennzeichnet ist, dass**
sie ein Auswurfmittel (6) umfasst, um die Elemente (2) vom Fördermittel (3) wegzuräumen, indem sie im Wesentlichen entlang der Queranschläge (5) verschoben werden, und wenigstens einen Schieber (7) umfasst, der geeignet ist, sich wenigstens quer zur Förderrichtung (4) zu bewegen, um eine Kolonne von Elementen (2) gegen einen Queranschlag (5) in Richtung des Austrittsbereichs (8) zu schieben, wobei das Auswurfmittel (6) somit auf das Element (2) wirkt, das am weitesten vom Austrittsbereich (8) entfernt ist und sich zu ihm hinbewegt, wobei jedes der Elemente (2) der Kolonne auf das vor ihm in Richtung des Austrittsbereichs (8) wirkt.

2. Sortiervorrichtung (1) nach Anspruch 1, wobei der wenigstens eine Schieber (7) geeignet ist, sich auch in der Förderrichtung (4) und in derselben Richtung zu bewegen.

3. Sortiervorrichtung (1) nach Anspruch 2, wobei der wenigstens eine Schieber (7) dafür angeordnet ist, der Bewegung zu folgen, die ein Queranschlag (5) in der Förderrichtung (4) erfährt, während der Schieber (7) sich quer zu der Richtung bewegt.

4. Sortiervorrichtung (1) nach einem der Ansprüche 1 bis 3, wobei
das Auswurfmittel (6) einen Riemen (9) vom Typ Endlosband umfasst, auf dem wenigstens ein Finger (10) auskragend angebracht ist, der den Schieber (7) bildet und dessen Ende auf die Elemente (2) wirkt.

5. Sortiervorrichtung (1) nach einem der Ansprüche 1 bis 4, **dadurch gekennzeichnet, dass**
sie ferner einen vorderes Anschlagmittel (11) vom Typ Halteplatte umfasst, das sich vom Fördermittel (3) entfernt erstreckt, um die Elemente (2) gegen dieses zu halten, wobei sich der wenigstens eine Schieber (7) beiderseits dieses vorderen Anschlagmittels (11) erstreckt, so dass er in den Bereich mitgenommen wird, der sich auf einer Seite des vorderen Anschlagmittels (11) befindet, und auf die Elemente (2) im gegenüberliegenden Bereich wirkt.

6. Sortierverfahren für Elemente (2) vom Typ Kappe, Verschlüsse oder andere Schließteile eines Behälters, ja sogar in der Art mit Kragen wie ein Kunststoffflaschen-Vorformling, das Verfahren umfassend
Fördern der Elemente (2) auf einem Fördermittel (3), das in einer Förderrichtung (4) zirkuliert, von einem Beschickungsbereich bis zu einem Austrittsbereich (8), der sich auf einer Seite des Fördermittels (3) befindet, Auswerfen der schlecht ausgerichteten Verschlusselemente beim Lauf auf dem Band zwischen dem Trichter, Beschickungsbereich, und dem Austrittsbereich, Wegräumen der Elemente (2) von dem Fördermittel (3), die zu diesem Zeitpunkt auf dem Fördermittel (3) vorhanden sind, in Richtung des Austrittsbereichs (8),
wobei das Verfahren **dadurch gekennzeichnet ist, dass** das Wegräumen der Elemente (2) vom Fördermittel (3) durch Schieben derselben durch Kontakt mit einem beweglichen Schieber (7) erfolgt,
und dadurch, dass die Bewegungsgeschwindigkeit des Schiebers (7) quer zur Förderrichtung (4) schnell genug ist, damit sowohl ein Element (2), das sich am Ende des Fördermittels (3) nahe dem Austrittsbereich (8) befindet, als auch ein Element (2), das sich am anderen Ende befindet, in eine Einmündung des Austrittsbereichs (8) eintreten können, unter Berücksichtigung der Fortbewegung des Fördermittels (3) in der Förderrichtung (4) .

7. Sortierverfahren nach Anspruch 6, wobei der Schieber (7) sowohl quer zur Förderrichtung (4), das heißt von einer Seite zur anderen des Fördermittels (3), als auch entlang der Förderrichtung (4) beweglich ist.

8. Sortierverfahren nach Anspruch 7, wobei die Laufgeschwindigkeit des Schiebers (7) in der Förderrichtung (4) so ist, dass der Schieber (7) der Bewegung des Fördermittels (3) in der Richtung folgt.

9. Sortierverfahren nach einem der Ansprüche 6 bis 8, wobei
die Laufgeschwindigkeit des Schiebers (7) zur Laufgeschwindigkeit des Fördermittels (3) proportional ist.

## Claims

1. Sorting device (1) for elements (2) such as caps or stoppers for closing a flask or bottle, or else plastic preform elements, comprising a continuous conveying means (3) arranged to move in a conveying direction (4) and provided with successive transverse stops (5) between which the elements (2) can rest in the form of a transverse alignment and thus be transported by said conveying means (3) from a supply zone of the sorting device (1), said sorting device (1) also having an output zone (8), at which the elements (2) leave the conveying means (3) after having been brought to this zone thereby, and in which, during the circulation on the conveyor belt between the hopper, supply zone, and output zone, the poorly oriented capping elements are ejected,
which sorting device (1) is **characterized in that** it comprises an ejection means (6), for releasing the elements (2) from the conveying means (3) by moving them essentially along the transverse stops (5), comprising at least one pusher (7) able to move at least transverse to the conveying direction (4) so as to push a column of elements (2) against a transverse stop (5) towards the output zone (8), the ejection means (6) thus acting on the element (2) furthest from the output zone (8) and moving towards this zone, each of the elements (2) of the column acting against the element that is in front of it in the direction of the output zone (8).

2. Sorting device (1) according to Claim 1, wherein the at least one pusher (7) is also able to move in the conveying direction (4) and in the same sense.

3. Sorting device (1) according to Claim 2, wherein the at least one pusher (7) is arranged to follow the movement that a transverse stop (5) undergoes in the conveying direction (4) while said pusher (7) moves transverse to said direction.

4. Sorting device (1) according to any one of Claims 1 to 3, wherein
the ejection means (6) comprises a belt (9), of the endless band type, on which is mounted with an overhang at least one finger (10) forming a pusher (7) and of which the end comes to act on the elements (2).

5. Sorting device (1) according to any one of Claims 1 to 4, **characterized in that**
it also comprises a frontal stop means (11), of the holding plate type, extending at a distance from the conveying means (3) so as to hold the elements (2) against the latter, the at least one pusher (7) extending on either side of this frontal stop means (11), so as to be driven into the zone situated on one side of said frontal stop means (11) and to act on the elements (2) in the opposite zone.

6. Sorting method for elements (2) such as caps, stoppers or other parts for closing a container, or even collared elements such as a plastic bottle preform, said method comprising
conveying the elements (2) on a conveying means (3) circulating in a conveying direction (4), from a supply zone as far as an output zone (8) situated on one side of said conveying means (3),
ejecting, during the circulation on the conveyor belt between the hopper, supply zone, and output zone, the poorly oriented capping elements,
releasing from the conveying means (3) towards the output zone (8) the elements (2) that are present on the conveying means (3) at this moment,
which method is **characterized in that**
releasing the elements (2) from the conveying means (3) is done by pushing them by contact with a mobile pusher (7),
and **in that** the speed of movement of the pusher (7) transverse to the conveying direction (4) is fast enough for both an element (2) that would be situated at the end of the conveying means (3) close to the output zone (8) and an element (2) that would be situated at the other end to be able to pass through a mouth of the output zone (8), taking into account the movement of the conveying means (3) in the conveying direction (4).

7. Sorting method according to Claim 6, wherein
the pusher (7) is able to move both transverse to the conveying direction (4), i.e. from one side to the other of the conveying means (3), and in said conveying direction (4) .

8. Sorting method according to Claim 7, wherein
the speed of circulation of the pusher (7) in the conveying direction (4) is such that said pusher (7) follows the movement of the conveying means (3) in said direction.

9. Sorting method according to any one of Claims 6 to 8, wherein
the speed of circulation of the pusher (7) is proportional to the speed of circulation of the conveying means (3).
